# EUROPEAN PATENT APPLICATION

(11) **EP 2 999 092 A1**
(43) Date of publication of application: **23.03.2016**
(21) Application number: 14185367.1
(22) Date of filing: 18.09.2014
(51) Int. Cl.: H02K 3/30, H02K 3/40, H01B 3/30, H01B 3/40

(54) **Insulation of a wound conductor and method for insulating such a conductor**

(71) Applicant: ABB Technology AG, 8050 Zürich (CH)
(72) Inventor: Krivda, Andrej, 5430 Wettingen (CH); Ho, Chau-Hon, 4332 Stein (CH); Ghoul, Cherif, 68200 Mulhouse (FR); Van-Loon, Jan, 6048 Horw (CH); Xie, Lei, 5442 Fislisbach (CH); Tzavalas, Spiros, 5426 Lengnau (CH)
(74) Representative: ABB Patent Attorneys

(57) **Abstract**

An insulation of wound conductor for an electrical machine is proposed. The conductor (201) includes m conductor strands wound as Roebel bar out of an electrically conductive, an insulation layer (203) being at least partially provided around the conductor (201). Between the conductor (201) and the insulation layer (203) an intermediate layer (202) is provided. The intermediate layer (202) has a lower conductivity than the conductor (201). An electric machine comprising such a conductor as well as the method for insulating such a conductor is proposed.

## Description

### Technical Field

The invention relates to the field of wound conductors for electrical machines, in particular to the insulation of a wound conductor for an electrical machine. The invention further relates to a method for insulating a wound conductor for an electrical machine.

### Background Art

Wound electrical conductors, such as coils or Roebel bars for an electromotor or generator, are insulated for avoiding contact between the single windings of the coils, but also for avoiding a short between the coil and other conductive components of the electromotor, for example the stator of the electromotor. For instance, the main wall insulation (e.g. mica tape and impregnated resin) is used to insulate a wound conductor on full potential to the stator core on ground potential.

Currently, the so-called vacuum pressure impregnation (VPI) technology is used and widely applied by many machine manufacturers. In this process, layers of mica tape are wound on conductors. The layers of mica tape are impregnated with thermosetting resins and thermally cured subsequently to obtain the so-called main wall insulation - the final mica-resin composite. In case of motors and small generators (< 15 kV) complete stators with inserted form-wound coils are fully impregnated in a global VPI process. For large generators, insulated Roebel bars are manufactured and impregnated individually (single VPI).

The principle of using mica tape and resin impregnation has not changed for almost one century and is well established to produce main wall insulation on a complex conductor shape and overall size, such as coils or Roebel bars for large electrical machines. To create a finished stator coil and Roebel bar today, the widespread application of robotics for coil forming, insulation taping and consolidation have improved the known process. However, these procedures are still time-consuming and require multiple steps.

More remarkably, only little development has been done on the impregnation process and materials with all drawbacks remaining: Handling of liquid resins in the workshops - usually epoxy-anhydride and polyester resin systems - causes health and safety as well as environmental issues due to evaporation of chemical gases from the large VPI tanks. Both impregnation and curing are time (numerous hours) and energy (heating of large ovens) consuming while also creating chemical fumes that have to be eliminated.

Furthermore, since only low viscosity liquid resins are applicable in this known process, the processes are restricted to thermoset materials only. The principle of mica tape impregnation - so: filling gaps with liquids - will always bear the risk of voids and partial discharge resulting into a limitation of the design field.

### Brief Summary of the Invention

In view of the above, a wound conductor arrangement according to claim 1, an electric machine including a wound conductor arrangement according to claim 12, and a method for insulating a wound conductor for an electrical machine according to claim 13 are provided. Further aspects, advantages, and features of the present invention are apparent from the dependent claims, the description, and the accompanying drawings.

According to an aspect of the invention, a wound conductor arrangement for an electrical machine is provided. The wound conductor arrangement includes a wound conductor including an electrically conductive material having an electrical conductivity value. The wound conductor arrangement further includes an insulation layer being at least partially provided around the wound conductor by a shrinkable tube including insulating material, and an intermediate layer provided between the wound conductor and the insulation layer. The intermediate layer has a conductivity value less than the conductivity value of the wound conductor.

The wound conductor arrangement according to embodiments described herein offers an advantageous alternative to the mica-resin main wall insulation obtained by traditional VPI technology. The wound conductor arrangement according to embodiments described herein offers several advantages such as better electrical performance due to much lower partial discharge (PD), reduced processing time, simplified processing steps, increased performance with higher fields and/or higher voltages as well as less environmental, health and safety issues. In addition, the method can be applied to other MV and HV electrical devices insulations - in particular in cases of complex shapes of electrical conductors and windings.

According to a further aspect of the invention, a method for insulating a wound conductor for an electrical machine is provided. The method includes fitting the wound conductor in a shrinkable tube providing at least a layer of insulation material configured for providing the main electrical insulation of the wound conductor and shrinking the shrinkable tube being around the wound conductor by a thermal treatment. The method for insulating a wound conductor further includes providing an intermediate layer between the wound conductor and the insulation layer, wherein the intermediate layer has conductivity less than the conductivity of the wound conductor.

Embodiments described herein allow for simplifying the process for insulating a wound conductor compared to the VPI technology. A simplified process results in decreased production costs, which in turn influence the costs for the end product. Further, the method according to embodiments described herein is less time consuming than the known processes and, therefore, may help increasing the productivity of a production line.

### Brief Description of the Drawings

The subject matter of the invention will be explained in more detail in the following text with reference to preferred exemplary embodiments which are illustrated in the drawings, in which:
Figure 1a is a schematic drawing of a coil of an electric machine;
Figure 1b is a schematic drawing of a wound conductor, which may be used in a wound conductor arrangement according to embodiments described herein,
Figure 2a shows a schematic front view of a wound conductor arrangement according to embodiments described herein;
Figure 2b shows a schematic perspective view of a wound conductor arrangement according to embodiments described herein;
Figure 2c shows a schematic front view of a wound conductor arrangement according to embodiments described herein;
Figures 3 shows a schematic sectional view of a test conductor in a test arrangement; and
Figure 4 shows a flow chart of a method for isolating a wound conductor according to embodiments described herein.

The reference symbols used in the drawings, and their meanings, are listed in summary form in the list of reference symbols. In principle, identical parts are provided with the same reference symbols in the figures.

### Preferred Embodiments of the Invention

According to embodiments described herein, a wound conductor arrangement is provided, which in particular is used in electric machines. For instance, the wound conductor arrangement according to embodiments described herein may be used in electrical motors, generators, and/or transformers.

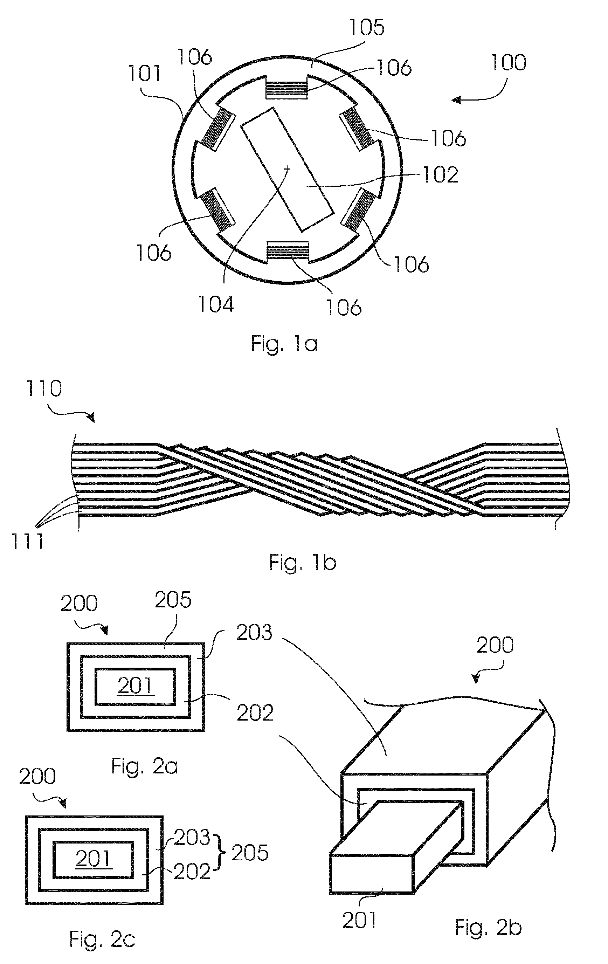

Figure 1a shows an example of a wound coil in a basic structure of an electrical motor. The electrical motor 100 includes a stator 101 and a rotor 102.The stator 101 is exemplarily shown having a stator core 105, which is for instance provided in a cylinder-like shape and which is provided with six wound conductors 106 or multi-turns, such as coils or windings, which are connected to a power source. The magnetic rotor 102 (which may also include a wound conductor, which is not shown in Fig. 1a for the sake of simplicity) may be adapted for rotating about an axis 104 pointing in the plane of the drawing sheet. By providing current in the windings 106, a magnetic field is induced. The magnetic rotor 102 may be rotated in the direction of one of the magnetic fields induced by the windings 106 by the magnetic force due to the polarity of the generated magnetic field. The rotor 102 is rotated until adverse poles of the magnetic fields of the rotor 102 and the windings 106 face each other. The windings 106 may then be commutated and the magnetic poles of the rotor 102 and the windings 106 - having the same polarity after commutation - reject each other. Due to the magnetic forces between the rotor 102 and each winding 106, which reject and attract each other, the rotor 102 is continuously rotated. In this way, a rotational movement of the rotor 102 may be achieved. It should be understood that an electrical machine as referred to herein is not limited to the design shown in Figure 1a and that - for instance-the coil may be statically arranged around a rotor.

Generally, an electrical machine as referred to herein may be an electrical machine for high voltages. For instance, the electrical machine and the wound conductor arrangement according to embodiments described herein may be adapted for a rated voltage being typically larger than 1 kV, more typically larger than about 15 kV, and even more typically larger than about 30 kV. In some embodiments, the electrical machine and the wound conductor arrangement according to embodiments described herein may be adapted for an electric machine, such as a motor or a generator working with a frequency of about 50 Hz.

Figure 1b shows a partial view of a further example of a wound conductor 110. Figure 1b shows a Roebel bar 110, which may be used as a wound conductor in electrical machines in embodiments described herein. The Roebel bar 110 includes several strands 111 of conducting material, which are wound about each other.

It should be understood that embodiments of the invention are not limited to the embodiments shown in the figures. Rather, the embodiments shown in the figures are only examples, e.g. examples for wound conductors. Further examples may include other wound conductor arrangement being configured for an electrical machine for generating a magnetic field. According to some embodiments described herein, the term "configured to be used in an electrical machine, such as an electrical motor, a generator, or a transformer " may be understood in that the size, the dimensions, the shape, the number of windings, the material etc. may be suitable for being used in the respective electrical machine. The size, the dimensions, the shape, the number of windings, and the material of the wound conductor suitable for an electrical machine may be chosen depending on the size and the intended application of the electrical machine.

According to embodiments described herein, the single strands 111 of Figure 1b may, as the single wires of the coil, too, be isolated against each other. For instance, the single strands or wires may be coated with an isolated material before being wound to a wound conductor arrangement. However, due to the application of the wound conductor in electrical machines, it is desirable to have the wound conductor isolated against other components of the electrical machine, such as magnets, conductive materials, electrical lines and the like.

Embodiments of the present invention relate to an insulation material and process concept for wound coils and Roebel bars used in electrical machines (e.g. motors and generators), especially for high voltage machines. In embodiments described herein, a wound conductor arrangement for an electrical machine includes a wound conductor including an electrically conductive material having an electrical conductivity value, and an insulation layer being at least partially provided around the wound conductor by a shrinkable tube including insulating material. Further, an intermediate layer is provided between the wound conductor and the insulation layer. Typically, the intermediate layer has a conductivity value less than the conductivity value of the wound conductor. According to some embodiments described herein, the shrinkable tube being provided around the wound conductor may include a shrinkable tube, which has already been shrunk in a shrinking process.

The term "at least partially provided around the wound conductor" may be understood in that a wound conductor may be surrounded by the insulation layer at least partially, e.g. not over the whole length of the wound conductor. In one embodiment, the insulation layer being at least partially provided around the wound conductor may be understood in that at least 60% of the surface of the wound conductor to be isolated may be covered by the insulation layer, more typically at least 70% of the surface of the wound conductor to be isolated may be covered by the insulation layer, and even more typically at least 80% of the surface of the wound conductor to be isolated may be covered by the insulation layer. According to some embodiments, the wound conductor may include a substantially straight portion (e.g. within a stator slot) and a substantially bent portion (e.g. the overhang of the stator), wherein the insulation layer is provided around the straight portion of the wound conductor, whereas the overhang might not be covered by the insulation layer. In some embodiments, the insulation layer being partially provided around the wound conductor may be understood in that the insulation layer does not surround the wound conductor by 360° over the whole length, but may, for instance, include a slit free of insulation material running along a defined length of the wound conductor or even the whole length of the wound conductor.

According to some embodiments, the intermediate layer may have a conductivity value greater than the conductivity value of the insulation layer. In some embodiments described herein, the intermediate layer may include a semiconductor material. Typically, the term "semiconductor" as used in this context should be understood as a material, which has electrical conductivity between that of a conductor (such as copper) and that of an insulator (such as glass). According to some embodiments, the intermediate layer may have a conductivity value between typically about 10⁻⁵ S/m and about 10³ S/m at 20°C, and more typically a conductivity value of between about 10 to about 10² S/m at 20°C. Compared thereto, a conductor as referred to herein may be understood as a material having the property of transmitting electricity. Typically, a conductor as referred to herein may have a conductivity value equal to or greater than 10³ S/m at 20°C. The insulator, or insulation material as used herein, may be understood as a material that resists electricity. The conductivity of the insulation material may typically be of from about 1*10⁻⁸ to about 1*10⁻²⁰ S/m at 20 °C, and more typically from 1*10⁻⁹ to 1*10⁻¹⁶. For example, the conductivity of Al₂O₃ is from 10⁻¹⁰ to 10⁻¹² S/m.

According to embodiments described herein, the shrinkable tube, by which the insulation layer is applied to the conductor according to embodiments described herein, may be used as the main electrical insulation layer around the winding coils or bars, and may be denoted as main wall insulation (which will be explained in detail below). According to some embodiments, a wound conductor being provided with a shrinkable tube may include a wound conductor with a shrunk tube, e.g. a shrinkable tube after a shrinking process. Typically, the shrinkable tube can be any suitable type of heat or cold shrinkable polymeric material and composite. For instance, the shrinkable tube may include at least one material chosen from the group consisting of: a polymeric material, a polymeric composite, polyolefin, fluoropolymer, polyester based materials, PVC, neoprene, and polyesterimide. According to some embodiments, the insulation material is chosen as a material being resistant against partial discharge.

In some embodiments, which may be combined with other embodiments described herein, the shrinkable tube comprises a shrinkage ratio of about 2:1 to 6:1 under thermal treatment, such as a treatment including heating the shrinkable tube and/or cooling the shrinkable tube. According to some embodiments, the shrinkage ration of the shrinkable tube may even be higher than 6:1 under thermal treatment. According to some embodiments, the shrinkable tube may have a certain level of moisture before being shrunk. In other alternative or additional embodiments, the shrinkable tube may have a temperature dependent elasticity. For instance, the shrinkage temperature for materials used in embodiments described herein, such as polyolefin based materials, may be between about 100°C and about 120 °C, or higher. According to other embodiments, the shrinkage temperature for materials used in embodiments described herein, such as fluoropolymer based materials may between about 150°C and about 175 °C, or higher.

In some embodiments, the shrinkable tube may be a cold shrinkable tube, which in particular shrinks without the application of heat. For instance, the shrinkable tube may be provided with a supplying strap, which is removed for inducing the shrinking process. The skilled person will understand that the term "thermal treatment" may include a treatment at a temperature, at which the shrinking tube shrinks.

According to some embodiments described herein, the shrinkable tube may be adapted, e.g. by being adapted in size and material, so as to provide a tight fitting around the wound conductor after the shrinkage process. In one embodiment, tight fitting may include a contact between the shrank tube and the wound conductor, in particular a contact between the shrank tube and the wound conductor over typically at least 85% of the area of the shrank tube, more typically at least 90% of the area of the shrank tube, and even more typically at least 95% of the area of the shrank tube. According to some embodiments, the coating of the wound conductor provided by the shrunk tube may provide a continuous coating of the surface of the wound conductor. Typically, at least 60% of the surface of the wound conductor to be isolated may be covered by the shrank tube, more typically at least 70% of the surface of the wound conductor to be isolated may be covered by the shrank tube, and even more typically at least 80% of the surface of the wound conductor to be isolated may be covered by the shrank tube. According to some embodiments described herein, the surface of a wound conductor to be isolated may be understood as the surface of the wound conductor facing another conducting surface (e.g. the stator core) in an electrical machine or during operation. According to alternative or additional embodiments, the surface of the wound conductor to be isolated may include the whole surface of the wound conductor. According to some embodiments, the wound conductor may include a substantially straight portion (e.g. within a stator slot) and a substantially bent portion (e.g. the overhang of the stator). Typically, more than 85%, more typically more than 90%, and even more typically more than 95% of the substantially straight portion of the wound conductor may be covered by the shrank tube. In some embodiments, the substantially straight portion of the wound conductor in the stator slot may fully be covered by the shrank tube.

The term "substantially" as used herein may mean that there may be a certain deviation from the characteristic denoted with "substantially." For instance, the term "substantially straight" refers to an arrangement of an element which may have certain deviations from the exact straight arrangement, such as a deviation from the straight arrangement along about 1% to about 15% of the total length of the straight element.

The insulation concept according to some embodiments described herein includes also an intermediate layer being a semiconductive layer between insulation and conductor to reduce high field stresses. The semiconductor material may be composed of a conductive polymeric material or composite. In the latter case, the polymeric material may be filled with conductive particles such as carbon black. In some embodiments, the semiconductive material may be formed from an insulation material filled with any organic additive (e.g. antioxidants) or inorganic filler (e.g. alumina or mica). According to some embodiments, the intermediate layer may include at least one material from the group consisting of: a conductive polymeric material (e.g. a polymer as described above with respect to the insulation layer), a conductive composite, carbon black filled silicone, epoxy, mastic, a material including fillers like TiO₂, V₂O₅, Cr₂O₃, MnO, Fe₂O₃, CoO, NiO, Cu₂O, ZnO, ZnS, Ta₂O₅, Y₂O₃, ZrO₂, Nb₂O₅, MoO₃, In₂O₃, SnO₂, La₂O₃, Ta₂O₅, WO₃, SiC, B₄C, WC, W₂C, TiC, ZrC, HfC, NbC, TaC, Cr₃C₂, Mo₂C, SnₓSb_{y}O_{z}, a metal layer of aluminum, a noble metal, epoxy, silicone, polyester resin, polyesterimide resin, PU, acryl resin, and Novolac resin.

The insulation according to embodiments described herein is a promising alternative compared to the mica-resin main wall insulation obtained by traditional VPI (Vacuum Pressure Impregnation) technology. It offers many benefits such as better electrical performance due to much lower PD, reduced processing time, simplified processing steps as well as less environmental, health and safety issues.

Figures 2a and 2b show a schematic drawing of a wound conductor arrangement according to embodiments described herein. The wound conductor arrangement 200 includes a wound conductor 201, which is - for the sake of simplicity - shown as a bulk metal. In the actual application, the winding may consist of multiple strands with strand and turn insulation. The wound conductor arrangement 200 further includes an intermediate layer 202, which may be an intermediate layer as described above. The intermediate layer 202 as well as the insulating layer 203 surround the conductor 201 in the embodiment shown in Figures 2a and 2b.

In one embodiment, the semiconductive layer is applied between conductor and insulation before or during application of the shrinkable tube and may act as adhesive. In another embodiment, the semiconductive layer is part of or integrated inside the shrinkable tube-e.g.by providing a multi-layer shrinkable tube with an inner semiconductive and outer insulation layer, as will be explained in detail below. According to some embodiments, a multi-layer shrinkable tube as referred to herein may include a shrinkable cross-linked or cross-linkable semiconductor (as intermediate layer as referred to herein) and a shrinkable cross-linked or cross-linkable insulation layer.

Accordingly, in Figure 2a, the shrinkable tube 205 may be presented by the insulation layer 203 only. In an alternative embodiment, such as the embodiment shown in Figure 2c, the shrinkable tube 205 may be presented by the intermediate layer 202 together with the insulation layer 203.

Therefore, the most simple structure of a wound conductor arrangement according to embodiments described herein consists of two layers (semiconductive or intermediate layer and insulation layer). However, a multiple layer (> 2) structure with more features is also possible in some embodiments. In one embodiment, another outer slot corona protection layer may be applied via coating, painting or spraying of a semiconductive material. Another option would be the use of a 3-layer shrinkable tube. In another embodiment a field grading material is applied on one of the outer layers for end corona protection. The field grading layer may be used when a field peak appears, in particular where the windings exit the stator core. Field peaks may cause damages to the insulation of the wound conductor. For avoiding such field peaks, field grading tapes or end corona protection tapes may be applied, which may minimize the field peak. In one example, a field grading layer may be applied by a SiC filled tape or a ZnO containing tape.

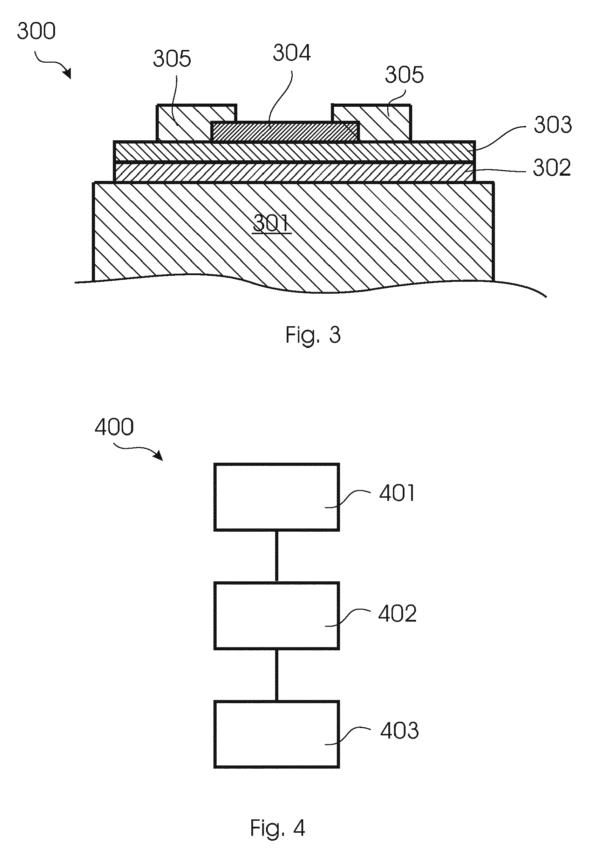

In the following, one example of a conductor with a shrinkable tube in a test arrangement including experimental data is described. To manufacture test bars, a bulk copper bar with the dimension of 10×50×500 mm³ was used as the electrical conductor. A polyolefin based heat shrinkable tube was used (recovered wall thickness of about 2.6 mm). A carbon black filled semiconductive silicone paste was used as the intermediate layer. Figure 3 shows the experimental setup. Figure 3 shows the conductor arrangement 300 including a conductor 301, an intermediate layer 302, and an insulation layer 303. According to some embodiments described herein, the experimental setup also includes an electrode semiconductive layer 304, and a field grading tape 305 serving as test insulation. The field grading layer is applied in the example test outside of the wound conductor for avoiding corona appearance and arcing at the test bars, which would manipulate the test results. The field grading layer may be used with the purpose of avoiding electrical field peaks between potential and ground.

Two types of test bars were tested. Test bar A with and test bar B without semiconductive layer. In order to evaluate the electric endurance by application of HV and in order to avoid flashovers, the test bar was taped with additional semiconductive tape 304 and field grading tape 305 as schematically shown in Figure 3. The time until breakdown was measured for both types and under the following conditions: voltage of 20 kV AC and stress of 7.7 kV/mm. The time to breakdown for type B (without intermediate layer) was 2 min, whereas the time to breakdown for type A (with intermediate layer) was 183 h to 650 h. Thus, the wound conductor arrangement with intermediate layer according to embodiments described herein provides a very long endurance and security compared to the arrangement without intermediate layer.

According to some embodiments, a method for insulating a wound conductor for an electrical machine is provided. Figure 4 shows a flow chart of the method 400 according to embodiments described herein. The method 400 includes in box 401 fitting the wound conductor in a shrinkable tube providing at least a layer of insulation material.

Typically, the insulation layer provided in embodiments described herein is configured for providing the main electrical insulation or main wall insulation of the wound conductor. According to some embodiments described herein, the applicability of the insulation to be used as a main electrical insulation for the wound conductor depends inter alia on the AC breakdown strength of the pure material before and after shrinkage and the dielectric properties of the pure material before and after shrinkage.

According to embodiments described herein, the method 400 further includes in box 402 shrinking the shrinkable tube being around the wound conductor by a thermal treatment. In some embodiments described herein, the thermal treatment includes heating the shrinkable tube (e.g. before placing it around the conductor) and cooling the shrinkable tube so as to provoke a shrinking process (e.g. when the tube is placed around the conductor). According to some embodiments, the shrinkable tube being shrunk around the wound conductor may be understood as the shrinkable tube being positioned so as to cover the surface to be isolated before the shrinking process.

In box 403, the method 400 according to embodiments described herein includes providing an intermediate layer between the wound conductor and the insulation layer. Typically, the intermediate layer may be an intermediate layer as described above and may in particular have conductivity less than the conductivity of the wound conductor.

According to some embodiments, providing the intermediate layer includes providing the intermediate layer as a part of the shrinkable tube. For instance, a multi-layer shrinkable tube may be used. In one example, a process for manufacturing a wound conductor arrangement according to embodiments described herein may be performed follows. As a first step, the surface of the electrical conductor is cleaned, and in particular cases, pretreated. In a next step, the electrical conductor is fitted in the multi-layer heat shrinkable tube including at least the intermediate layer and the insulation layer. Further, according to some embodiments, the assembled conductor and tube are heated by warm gas, radiation heat, flame gun or heating oven or the like. In a further step, the finished conductor is cooled and can be used for further processing or direct application.

In some embodiments, the multi-layer tube including the insulation layer as well as the intermediate layer according to embodiments described herein may be a co-extruded tube or a tube being coated inside. For instance, the multi-layer tube may be a two-layer extrudate. According to some embodiments, the two-layer extrudate may include an adhesive material and carbon black for providing the semiconductive function of the intermediate layer.

According to an alternative embodiment, providing the intermediate layer includes coating the wound conductor with the intermediate layer before fitting the wound conductor in the shrinkable tube. For instance, the following process may be used for isolating the wound conductor. In a first step, a surface cleaning and pre-treatment of the electrical conductor takes place. A semiconductive layer coating may then be performed for providing the intermediate layer on the wound conductor, e.g. by painting, taping, brushing, or the like. In a next step, the electrical conductor is fitted in the heat shrinkable tube including the insulation material. The assembled conductor and tube is then heated by warm gas, radiation heat, flame gun, heating oven, or the like. In a next step, the finished conductor is cooled and may be used for further processing or direct application.

According to some embodiments, an electric machine, such as an electrical motor, a generator, a transformer, or the like including a wound conductor arrangement according to embodiments described herein is provided. Further, the use of a wound conductor arrangement according to embodiments described herein in an electrical machine is provided.

According to embodiments described herein, shrinkable materials can be well used as insulation. In embodiment of the invention, the use of such shrinkable material is described as tubes for insulation complex longitudinal conductors as they are present in HV electrical machines. The feasibility of the overall concept for insulation of windings has been shown in experimental data - in particular the benefit of a semiconductive layer between conductor and insulation. Further benefits resulting from the wound conductor arrangement according to embodiments described herein include the simplification of the processing compared to taping and impregnation and curing, the production time and cost reduction, the significantly reduced partial discharge in insulation material, and the increased performance with higher fields and/or higher voltages.

Though the present invention has been described on the basis of some preferred embodiments, those skilled in the art should appreciate that those embodiments should by no way limit the scope of the present invention. Without departing from the spirit and concept of the present invention, any variations and modifications to the embodiments should be within the apprehension of those with ordinary knowledge and skills in the art, and therefore fall in the scope of the present invention which is defined by the accompanied claims.

### Reference numerals

- 100: electrical motor
- 101: stator
- 102: rotor
- 104: rotation axis
- 105: stator core
- 106: wound conductor
- 110: Roebel bar
- 111: strands of Roebel bar
- 200: wound conductor arrangement
- 201: wound conductor
- 202: intermediate layer
- 203: insulation layer
- 205: shrinkable tube
- 300: wound conductor arrangement
- 301: wound conductor
- 302: intermediate layer
- 303: insulation layer
- 304: semiconductive layer
- 305: field grading
- 400: method
- 401-403: boxes

## Claims

1. Wound conductor arrangement (200; 300) for an electrical machine, comprising
a wound conductor (106; 110; 201; 301) comprising an electrically conductive material having an electrical conductivity value;
an insulation layer (203; 303) being at least partially provided around the wound conductor (201; 301) by a shrinkable tube comprising insulating material; and
an intermediate layer (202; 302) provided between the wound conductor (201; 301) and the insulation layer (201; 302), wherein the intermediate layer has a conductivity value less than the conductivity value of the wound conductor.

2. The wound conductor arrangement according to claim 1, wherein the intermediate layer (202; 302) comprises a semiconductor material and/or wherein the intermediate layer (202; 302) has a conductivity value between about 10⁻⁵ S/m and about 10³ S/m at 20°C, typically a conductivity value of between about 10 to about 10² S/m at 20°C.

3. The wound conductor arrangement according to any of the preceding claims, wherein the wound conductor (201; 301) has a conductivity value equal to or greater than 10³ S/m at 20°C.

4. The wound conductor arrangement according to any of the preceding claims, wherein the intermediate layer (202; 302) is a part of the shrinkable tube providing the insulation layer.

5. The wound conductor arrangement according to any of the preceding claims, wherein the wound conductor (201; 301) is a wound coil.

6. The wound conductor arrangement according to any of the preceding claims, wherein the wound conductor arrangement (200; 300) is configured to be used in an electrical motor, a generator, or a transformer.

7. The wound conductor arrangement according to any of the preceding claims, wherein the wound conductor arrangement (200; 300) is configured for a rated voltage of at least 1kV.

8. The wound conductor arrangement according to any of the preceding claims, wherein the shrinkable tube is shrank for effecting a tight fitting of the insulation layer on the intermediate layer (202; 302), or, if the intermediate layer (202; 302) is part of the shrinkable tube, for effecting a tight fitting of the intermediate layer and the insulation layer on the wound conductor.

9. The wound conductor arrangement according to any of the preceding claims, wherein the insulation layer provided by the shrinkable tube is configured to act as the main electrical insulation of the wound conductor (200; 300).

10. The wound conductor arrangement according to any of the preceding claims, wherein the shrinkable tube comprises at least one material from the group consisting of: a polymeric material, a polymeric composite, polyolefin, fluoropolymer, polyester based materials, PVC, neoprene, silicone, and polyesterimide and/or wherein the shrinkable tube comprises a shrinkage ratio of about 2:1 to 6:1 under thermal treatment.

11. The wound conductor arrangement according to any of the preceding claims, wherein the intermediate layer (202; 302) comprises at least one material from the group consisting of: a polymeric material, a polymeric composite, polyolefin, fluoropolymer, polyester based materials, PVC, neoprene, silicone, polyesterimide, a conductive polymeric material, a conductive composite, carbon black filled silicone, epoxy, mastic, a material including fillers like TiO₂, V₂O₅, Cr₂O₃, MnO, Fe₂O₃, CoO, NiO, Cu₂O, ZnO, ZnS, Ta₂O₅, Y₂O₃, ZrO₂, Nb₂O₅, MoO₃, In₂O₃, SnO₂, La₂O₃, Ta₂O₅, WO₃, SiC, B₄C, WC, W₂C, TiC, ZrC, HfC, NbC, TaC, Cr₃C₂, Mo₂C, SnₓSb_{y}O_{z}, a metal layer of aluminum, a noble metal, epoxy, silicone, polyester resin, polyesterimide resin, PU, acryl resin, and Novolac resin.

12. Electric machine, in particular an electromotor, having a wound conductor arrangement (200; 300) according to any of the preceding claims.

13. Method (400) for insulating a wound conductor (201; 301) for an electrical machine, comprising
fitting (401) the wound conductor (201; 301) in a shrinkable tube providing at least a layer of insulation material configured for providing the main electrical insulation of the wound conductor,
shrinking (402) the shrinkable tube being around the wound conductor (201; 301) by a thermal treatment;
the method further comprising:
providing (403) an intermediate layer (202; 302) between the wound conductor (201; 301) and the insulation layer (203; 303), the intermediate layer (202; 302) having a conductivity less than the conductivity of the wound conductor.

14. The method according to claim 13, wherein providing the intermediate layer (202; 302) comprises providing the intermediate layer (202; 302) as a part of the shrinkable tube or wherein providing the intermediate layer (202; 302) comprises coating the wound conductor (201; 301) with the intermediate layer (202; 302) before fitting the wound conductor (201; 301) in the shrinkable tube.

15. The method according to any of claims 13 to 14, wherein providing the intermediate layer (202; 302) comprises providing the intermediate layer (202; 302) having a conductivity value between about 10⁻⁵ S/m and about 10³ S/m at 20°C, typically a conductivity value of between about 10 to about 10² S/m at 20°C.
